# EUROPÄISCHE PATENTSCHRIFT

(11) **EP 0 538 645 B1**
(45) Veröffentlichungstag und Bekanntmachung des Hinweises auf die Patenterteilung: **12.04.1995**
(21) Anmeldenummer: 92116451.3
(22) Anmeldetag: 25.09.1992
(51) Int. Cl.: H01M 4/74, H01M 2/28

(54) **Trägergerüst für negative Elektroden von Bleiakkumulatoren**
Grid for negative electrode of lead accumulator
Grille pour électrode négative d'accumulateur au plomb

(30) Priorität: 23.10.1991 DE 4134978
(43) Veröffentlichungstag der Anmeldung: 28.04.1993
(73) Patentinhaber: VARTA Batterie Aktiengesellschaft, D-30405 Hannover (DE)
(72) Erfinder: Rusch, Wieland, Dr., W-4770 Soest (DE); Trippe, Gerwin, W-5820 Gevelsberg (DE); Sziksnus, Dieter, W-5600 Wuppertal (DE)
(74) Vertreter: Kaiser, Dieter Ralf, Dipl.-Ing.

(56) Entgegenhaltungen:
- EP-A- 0 247 327
- EP-A- 0 310 794
- PATENT ABSTRACTS OF JAPAN vol. 9, no. 123 (E-317)28. Mai 1985 & JP-A-60 010 560 ( FURUKAWA DENCHI ) 19. Januar 1985

## Beschreibung

Die Erfindung betrifft ein Trägergerüst für negative Elektroden von Bleiakkumulatoren in Form einer aus verbleitem Kupferstreckmetall bestehenden rechteckigen Gitterplatte mit einer an die Gitterplatte angegossenen Stromfahne aus Blei.

Derartige Gitterplatten als Träger für die aktive Masse sind beispielsweise aus der DE-PS 22 41 368 oder DE-PS 33 12 550 bereits bekannt. Sie machen sich die im Vergleich zu Gitterkonstruktionen aus Blei wesentlich höhere Leitfähigkeit des Kupfers zunutze, wobei dieses durch die Bleimasse kathodisch geschützt ist.

Das Streckmetall bei diesen bekannten Gitterplatten ist in einer Richtung parallel zu derjenigen Plattenseite gestreckt, an der sich der Stromableiter befindet. Die daraus sich ergebende Form und Orientierung der Gittermaschen verleiht dem Trägergerüst einen größeren Leitungsquerschnitt in vertikaler Richtung der Gitterplatte, was Elektroden mit großer Bauhöhe zugute kommt, weil der Innenwiderstand von Bleiakkumulatoren vorherrschend mit dem Elektronenwiderstand in Gitterlängsrichtung wächst (vgl. J. Euler und W. Nonnenmacher, Electrochimica Acta, 1960, Vol.2, Seiten 268-286).

Der Stromableiter wird bei den bekannten Gitterplatten von einer die gesamte Oberkante des Kupfergitters in Anspruch nehmenden Bleileiste und einer angeformten Anschlußfahne gebildet. Die Bleileiste hat die Funktion, den Strom an der Oberkante der Platte zu sammeln und zur Stromfahne zu leiten, das Massefeld nach oben abzuschließen, d.h. Masseausfall zu vermeiden, und die mechanischen Kräfte, die vom Gewicht der Platte und deren Trägheitskräften bei Beschleunigungsvorgängen ausgehen, aufzunehmen.

Dabei stellt gerade im Hinblick auf die eben erwähnte mechanische Beanspruchung der Übergangsbereich von der massiven Bleileiste zum Streckmetall eine kritische Stelle dar, weil er einesteils einen guten Stromübergang gewährleisten muß und zum anderen weder bruch- noch korrosionsanfällig sein darf.

Gemäß DE-PS 33 12 550 wird diesem Problem am besten dadurch Rechnung getragen, daß der mit der Bleileiste zu verbindende obere Rand der Gitterplatte in die Ebene der Gitterplatte flachgedrückt und darauf mit Blei umgossen wird, so daß sich das Streckmetall durch einen flachen Saum sich überkreuzender und im günstigen Fall jenseits der Kreuzungsstellen abgeschnittener Stege in der Bleileiste verankert.

Zumindest folgende Mängel sind solchem Trägergerüst jedoch verblieben: Beim Angießen der Bleileiste werden unvermeidbar auch diejenigen Zwickel der Gittermaschen mit Blei gefüllt, welche bereits aus der Unterkante der Leiste herausragen. Beim Pastieren nehmen diese Maschen sowie ihre Nachbarn keine Masse auf. Ein Randstreifen des verbleiten Streckmetallgitters ist damit durch die Masse nicht geschützt; er ist durch starke Entladebelastung gefährdet und kann sich u.U. auflösen.

Weiterhin stellt die Bleileiste allein wegen ihres Gewichts, weil sie sich über die gesamte Breite der negativen Elektrodenplatte erstreckt, eine Belastung für den Akkumulator dar.

Der Erfindung liegt deshalb die Aufgabe zugrunde, ein Trägergerüst für negative Elektroden von Bleiakkumulatoren anzugeben, welches ohne einen unverhältnismäßig hohen Gewichtsaufwand an stromleitendem Totmaterial eine optimale Masseausnutzung durch gute Stromverteilung sicherstellt und darüber hinaus hohen Festigkeitsansprüchen sowohl bei der Handhabung während der Elektrodenfertigung als auch im Batterieeinsatz gewachsen ist.

Die Aufgabe wird erfindungsgemäß durch ein Trägergerüst gelöst, wie es im Patentanspruch 1 definiert ist.

Bei dem neuen negativen Gitter ist für die Stromzu- und abführung allein eine Bleifahne vorgesehen, welche an die Gitterplatte unmittelbar und unter Belassung des Streckmetallgitters in seinem Originalzustand an der Verbindungsstelle angegossen ist. Ein flachgedrückter Bereich des Streckmetallgitters umgibt die Angußstelle von unten und von den Seiten her und ist mittels einer Kunststoffbeschichtung abgedeckt.

Der Vorteil des erfindungsgemäßen Fahnenangusses an den nicht flachgedrückten, sondern originalbelassenen Rand der Gitterplatte liegt darin, daß die Stege des Kupferstreckmetalls mit ihrer Schrägstellung in der Bleifahne verbleiben und durch Verklammerung die mechanische Festigkeit verbessern.

Damit ein solcher Anguß gelingt, muß sich eine entsprechende Gießform außerhalb des Angusses, jedoch um den für diesen vorgesehenen Bereich herum schließen, weshalb eine entsprechende Zone der Gitterplatte, die später in der Dichtungsebene der Gießformhälften liegt, flachgedrückt ist. Durch gummielastische Profile in der Gießform wird verhindert, daß unterhalb der Fahne liegende Gittermaschen sich mit Blei füllen.

Ein Gitter mit lediglich angegossener Fahne besitzt eine nicht ausreichende mechanische Festigkeit, insbesondere beim Hantieren der Platte nach dem Pastieren. Die Stege des Kupferstreckmetallgitters unterhalb der Bleifahne reißen leicht ein, und dabei ist die elektrochemische Stabilität des Kupfergitters gefährdet. Die erfindungsgemäße Umspritzung der flachgedrückten Gitterzone verleiht dem Trägergerüst ein hohes Maß an mechanischer Stabilität. Damit ist der besonders kritische Bereich des Blei/Kupferübergangs vor Korrosion während des Betriebs der Batterie geschützt.

Anhand der Figuren werden diese und weitere Vorteile des neuen Trägergerüstes noch näher erläutert
Figur 1 zeigt ein Trägergerüst in einer bevorzugten Ausführungsform gemäß der Erfindung.
Figur 2 zeigt das Trägergerüst nach Fig. 1 im Bereich des Fahnenangusses im Querschnitt.
Figur 3 zeigt ein modifiziertes Trägergerüst gemäß der Erfindung in einem Ausschnitt.

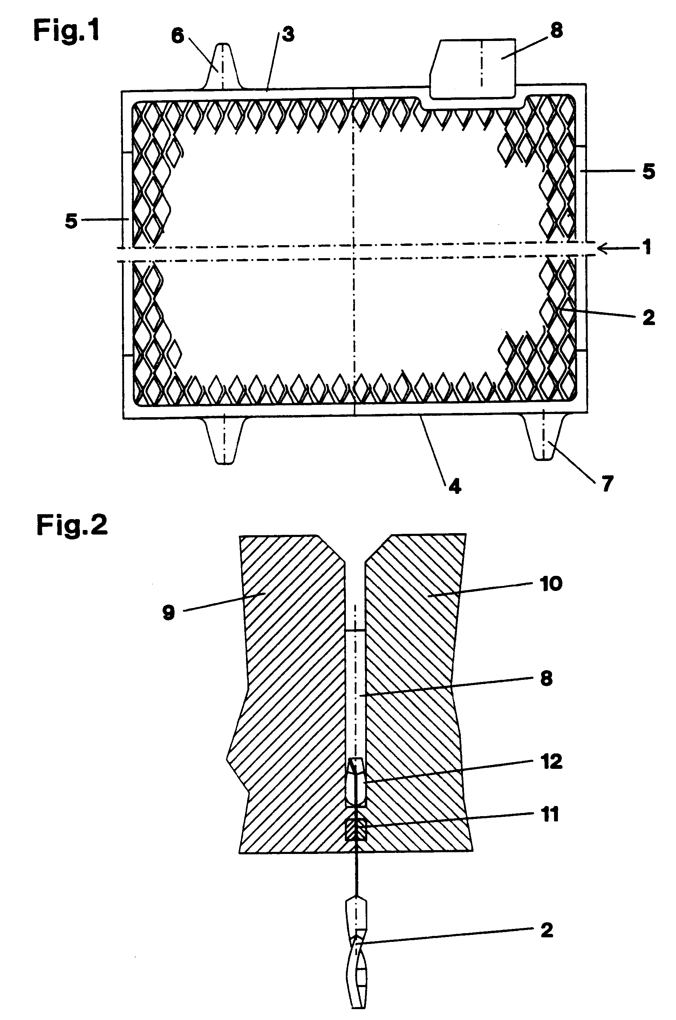

Nach Figur 1 besitzt die Gitterplatte 1 aus verbleitem Kupferstreckmetall 2 eine schützende Kunststoffumrahmung, bestehend aus Umspritzungen 3,4 des oberen und des unteren Gitterrandes sowie aus Kunststoffprofilen 5, die auf die Seitenkanten aufgeschoben sind. Die von der Kunststoffumrahmung erfaßten Ränder des Streckgitters sind vorteilhafterweise flachgepreßt. Eine allseitige Umrahmung kann auch durch einen einzigen Spritzvorgang erzeugt sein.

Als weiterer Schutz gegen die mechanische Belastung der Verbleiungsschicht im Fahnenbereich ist an der oberen Umspritzung 3 ein Nocken 6 zur Handhabung vorgesehen, während die untere Umspritzung 4 Füßchen 7 aus dem gleichen - und damit isolierenden - Kunststoff aufweist. Ein geeigneter Kunststoff ist z.B. Polypropylen oder, wenn die Gitter höheren Temperaturen standhalten müssen, Polycarbonat.

Besonders wichtig ist der den Fuß der Bleifahne 8 umgebende Abschnitt der Umspritzung 3, welcher eine - hier nicht sichtbare - Gitterzone aus flachgedrücktem Streckmetall abdeckt. Diese Zone, über der sich beim Fahnenanguß die beiden Formhälften 9, 10 des Gießwerkzeugs schließen, ist aus der Figur 2 ersichtlich, welche das Streckgitter 2 nach Einlegen in die Gießform mit dem von der Bleifahne 8 auszufüllenden Gießspalt im Querschnitt zeigt. Mit 11 sind in die Form eingelegte Gummiprofile bezeichnet, die verhindern, daß Blei selbst in die hier flachgepreßten Zwickel des Gitters fließt. Der in den Gießspalt hineinragende obere Rand 12 des Streckgitters 2 ist nicht flachgedrückt, so daß es zu einer sicheren Einbettung der schrägstehenden Stege in dem erstarrten Blei kommt.

Aus der Kunststoffumrahmung der neuen Gitterplatte ergeben sich auch Vorteile im Hinblick auf die Pastierung. Beim Pastieren gleiten die Gitter auf einem Förderband unter dem Pastiertrichter, wobei der Pastiertrichter gewöhnlich auf dem Gitter aufliegt. Dadurch wird die Plattendicke festgelegt. Demgegenüber erfolgt die Auflage des Pastiertrichters bei den Gitterplatten gemäß Erfindung auf dem Kunststoffrahmen, wodurch Plattendicken erreicht werden können, die über die Gitterdicke hinausgehen. Dabei wird durch die Auflage auf dem Kunststoffrahmen eine gleichartige Plattendicke sichergestellt.

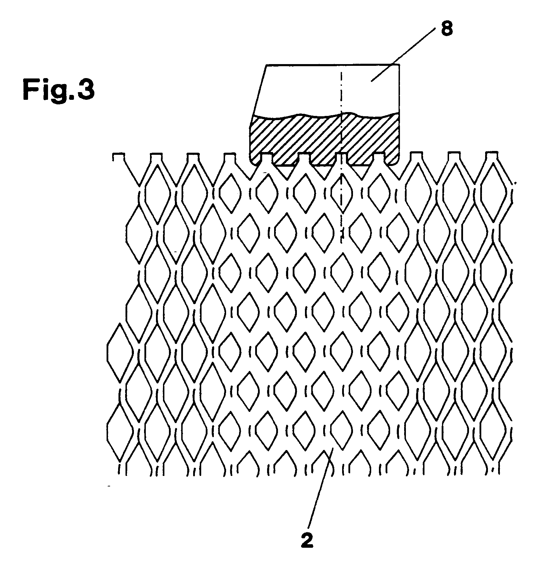

Eine besonders vorteilhafte Ausführungsform der neuen Gitterplatte zeichnet sich, wie in Figur 3 durch einen Ausschnitt dargestellt, dadurch aus, daß die Stegbreite des Kupferstreckmetalls 2 in dem unterhalb der Stromfahne 8 liegenden Bereich gegenüber seiner normalen Stegbreite verstärkt ist. Eine solche Maßnahme verbessert zusätzlich zu der gewählten Streckung des Gitters in Richtung parallel zu der mit der Stromfahne versehenen Plattenseite wegen der Materialverdichtung den Leitungsquerschnitt in der Vertikalen und kommt bei Elektroden mit großer Bauhöhe besonders zum Tragen.

Streckmetallgitter in dieser Ausführung sind durch eine Streckmetallmaschine, die während des Streckens die Stegbreite verändern kann, herstellbar.

Die Wahl einer größeren Stegbreite ist jedoch nicht beliebig, da unterschiedliche Dicken des Streckgitters innerhalb einer Platte im allgemeinen Schwierigkeiten beim Pastieren bereiten. Eine Hilfe bietet jedoch die Kunststoffumrahmung der erfindungsgemäßen Platte, indem sie geringe Dickenunterschiede ausgleicht.

Eine sinnvolle Einstellung der beiden Stegbreiten zueinander ist aber möglich und muß so erfolgen, daß sich bei der Herstellung des Gitters mit anschließendem Kalandrieren kein unerwünschten Verformungen ergeben.

Ein Streckmetall mit einheitlicher Stegbreite geht aus dieser Behandlung mit einer bestimmten -in der Regel maximalen- Gitterdicke hervor. Erfahrungsgemäß hat nun sowohl eine Vergrößerung als auch eine Verkleinerung der originalen Stegbreite einen Rückgang der Gitterdicke zur Folge. Dies bedeutet, daß es paarweise Stege von größerer und kleinerer Breite gibt, die allerdings empirisch gefunden werden müssen, mit denen Gitter von etwa gleicher Enddicke korrespondieren.

Beipielsweise hat ein Gitter mit einer Dicke von 4 mm die folgenden Parameter:
- Materialstärke: 0,4 bis 0,6 mm, vorzugsweise 0,5 mm
- Stegbreite: 2,8 bis 3,2 mm, vorzugsweise 3,0 mm
- Maschenlänge: 20 bis 30 mm, vorzugsweise 26 mm
- Maschenbreite: 8 bis 15 mm, vorzugsweise 12,5 mm

Für ein Gitter gemäß Erfindung ist eine Stegbreite von ca. 2,4 mm in seinem Hauptteil und für den Fahnenbereich eine Stegbreite von ca. 3,8 mm geeignet. Mit diesen Werten läßt sich das Streckmetall ohne Schwierigkeiten herstellen.

Diese Ausführungsform ist insbesondere bei langen (Länge > 0,5m) und damit auch schweren Gittern vorteilhaft. Damit wird nicht nur die Leitfähigkeit verbessert, sondern auch die Schock- und Vibrationsfähigkeit der gesamten Zelle deutlich gesteigert.

## Patentansprüche

1. Trägergerüst für negative Elektroden von Bleiakkumulatoren in Form einer aus verbleitem Kupferstreckmetall bestehenden rechteckigen Gitterplatte mit einer an die Gitterplatte angegossenen Stromfahne aus Blei, dadurch gekennzeichnet, daß das Streckmetall in dem den Fahnenanguß umgebenden Bereich der Gitterplatte flachgedrückt und mit Kunststoff umspritzt ist.

2. Trägergerüst nach Anspruch 1, dadurch gekennzeichnet, daß das Streckmetallgitter zusätzlich an den Ecken und entlang den freien Rändern der Gitterplatte flachgedrückt und mit Kunststoff umspritzt oder mittels Profilleisten aus Kunststoff abgedeckt ist.

3. Trägergerüst nach Anspruch 2, dadurch gekennzeichnet, daß an die Profilleisten Hantierungsnocken angeformt sind.

4. Trägergerüst nach einem der Ansprüche 1 bis 3, dadurch gekennzeichnet, daß das Streckmetallgitter in dem unterhalb der Stromfahne liegenden Bereich Stege mit größerer Breite als im übrigen Bereich des Gitters besitzt.

## Claims

1. A carrier framework for negative electrodes of lead accumulators in the form of a rectangular grid plate which is made from leaded copper mesh and which has a current lug of lead which is cast onto the grid plate, characterised in that the metal mesh is flattened in the region of the grid plate surrounding the location at which the lug is cast on and is extrusion-coated with plastics material.

2. A carrier framework as claimed in claim 1, characterised in that the metal mesh grid is additionally flattened at the corners and along the free edges of the grid plate and is extrusion-coated with plastics material or is covered by means of profile strips of plastics material.

3. A carrier framework as claimed in claim 2, characterised in that handling dogs are fqrmed on the profile strips.

4. A carrier framework as claimed in one of the claims 1 to 3, characterised in that the metal mesh grid has, in the region located below the current lug, webs of greater width than in the other region of the grid.

## Revendications

1. Structure de support pour électrodes négatives d'accumulateurs au plomb se présentant sous la forme d'une plaque de grille consistant en un métal déployé en cuivre revêtu de plomb, avec une cosse en plomb venue de fonderie sur la plaque de grille, structure de support caractérisée en ce que le métal déployé dans la zone de la plaque de grille entourant la cosse venue de fonderie est aplati et enrobé de matière plastique.

2. Structure de support selon la revendication 1, caractérisée en ce que la grille de métal déployé est aplatie en outre dans les angles et le long des bords libres de la plaque de grille et enrobée de matière plastique ou recouverte au moyen de barrettes profilées en matière plastique.

3. Structure de support selon la revendication 2, caractérisée en ce que l'on forme sur les barrettes profilées des ergots de maniement.

4. Structure de support selon l'une des revendications 1 à 3, caractérisée en ce que la grille de métal déployé possède dans la zone se trouvant en dessous de la cosse de raccordement des entretoises qui ont une plus grande largeur que dans le reste de la grille.
